# FASCICULE DE BREVET EUROPEEN

(11) **EP 0 650 891 B1**
(45) Date de publication et mention de la délivrance du brevet: **04.06.1997**
(21) Numéro de dépôt: 94402261.5
(22) Date de dépôt: 07.10.1994
(51) Int. Cl.: B64F 5/00, G05B 23/02, B64C 27/00

(54) **Procédé et dispositif pour la validation au sol des fonctions de sécurité du système de pilotage équipant un aérodyne**
Verfahren und Vorrichtung zur Betriebsprüfung am Boden der Sicherheitsfunktion einer Flugzeugsteuerungsanlage
Method and apparatus to perform on the ground the validation of the safety function of an aircraft control system

(30) Priorité: 28.10.1993 FR 9312985
(43) Date de publication de la demande: 03.05.1995
(73) Titulaire: SEXTANT AVIONIQUE, F-92366 Meudon la Forêt Cédex (FR)
(72) Inventeur: Guiol, Georges, F-91470 Limours (FR); Makowski, Thadée, F-78530 Buc (FR)
(74) Mandataire: de Saint-Palais, Arnaud Marie

(56) Documents cités:
- US-A- 3 680 069
- US-A- 4 782 292
- US-A- 4 969 367

## Description

La présente invention concerne un procédé et un dispositif pour la validation au sol des fonctions de sécurité du système de pilotage équipant un aérodyne tel qu'un hélicoptère.

D'une manière générale, on sait qu'il est nécessaire de vérifier périodiquement, (généralement au sol, avant chaque vol) l'intégrité des dispositions ou des dispositifs mis en place dans un système embarqué à bord d'un aérodyne, pour assurer le niveau de sécurité accordé par les services officiels lors de la certification de l'aéronef équipé.

Pour des systèmes de pilotage de type "simple chaîne", a sécurité est principalement assurée par l'autorité des actionneurs (vérins) et par des dispositifs de surveillance placés sur des paramètres caractéristiques de l'état de fonctionnement du système, ou capables d'identifier les dépassements des limites acceptées du système.

Ces paramètres ou ces limites de fonctionnement sont souvent évolutifs ou différents selon les conditions de vol. En particulier, ils sont variables en fonction de la vitesse de l'aéronef. Les dispositifs de surveillance et de tests avant vol doivent donc en tenir compte.

Pour tester au sol le fonctionnement des sécurités de l'aérodyne selon des conditions de vol telles que, par exemple, en vol à grande vitesse, la solution qui s'impose a priori consiste à recréer au niveau des capteurs ces conditions de vol, et ce, au moyen d'éléments extérieurs.

Toutefois, cette solution s'avère difficilement exploitable, d'une part, en raison de l'importance des moyens qui doivent être mis en oeuvre et, d'autre part, du fait que de nombreux capteurs simples n'ont pas la possibilité d'être stimulés à l'aide de moyens de simulation extérieurs.

L'invention a plus particulièrement pour but, non seulement de surmonter ce problème, mais également de proposer un procédé et un dispositif dont la mise en oeuvre s'intègre parfaitement aux phases de tests précédant le vol et ne peut pas étre déclenchée involontairement par le pilote pendant la phase de vol : Il est clair que l'enclenchement d'une phase de simulation en cours de vol pourrait poser des problèmes de sécurité.

Pour parvenir à ces résultats, le procédé selon l'invention met en oeuvre, en parallèle avec chacun des capteurs dont on veut simuler le fonctionnement dans au moins une condition de vol prédéterminée, des moyens de forçage commandables aptes à appliquer sur l'entrée du circuit de sécurité auquel se trouve connecté le capteur et en remplacement du signal de sortie émis par celui-ci, au moins un signal de simulation correspondant à celui qui serait émis par ce même capteur dans ladite condition de vol.

Il consiste en outre à utiliser au moins une position angulaire d'un organe de commande de pas collectif de l'aérodyne, comprise entre la position plein petits pas et la position limite de décollage pour activer les susdits moyens de forçage afin de produire le susdit signal de simulation lors d'une séquence de tests de validation de l'intégrité des circuits de sécurité.

Grâce à ces dispositions, la validation des sécurités est effectuée à un moment où l'aérodyne se trouve obligatoirement au sol dans une phase précédant le décollage.

La séquence de tests au cours de laquelle la chaîne de pilotage et les sécurités sont placées dans un ou plusieurs états correspondant à des domaines de vol à tester, est obtenue en utilisant l'information de position de l'organe de commande du collectif, c'est-à-dire d'une façon particulièrement ergonomique, et ce, sans exiger de moyen de commande spécifique.

Il s'avère que ce procédé ne permet pas de tester les capteurs dans les conditions de vol. C'est la raison pour laquelle l'invention prévoit dans un mode de réalisation préféré de doubler chacun des capteurs que l'on désire tester, par au moins un deuxième capteur sensible au même paramètre, de vérifier en vol la concordance des informations délivrées par ces deux capteurs, et d'émettre un signal d'alarme dans le cas où cette vérification ferait apparaître une discordance.

La différence de conduite des tests, à savoir des tests au sol en temps différé dans des conditions de vol simulées pour ce qui concerne les circuits de sécurité, et des tests en temps réel et dans des conditions réelles de vol pour ce qui concerne les capteurs, permet d'assurer un haut niveau de sécurité tel qu'exigé par la réglementation pour les vols sans visibilité externe.

Des modes d'exécution d'un dispositif selon l'invention seront décrits ci-après, à titre d'exemples non limitatifs, avec référence aux dessins annexés dans lesquels :
La figure 1 est un schéma synoptique illustrant le principe d'un système de pilotage automatique équipé de moyens de surveillance permettant de s'assurer de l'état de fonctionnement du calculateur numérique de consigne ;
La figure 2 est un schéma permettant d'illustrer le principe d'un circuit de validation au sol des sécurités d'un système de pilotage automatique équipé d'un détecteur d'allongement d'un vérin associé à un dispositif de recentrage de ce vérin.

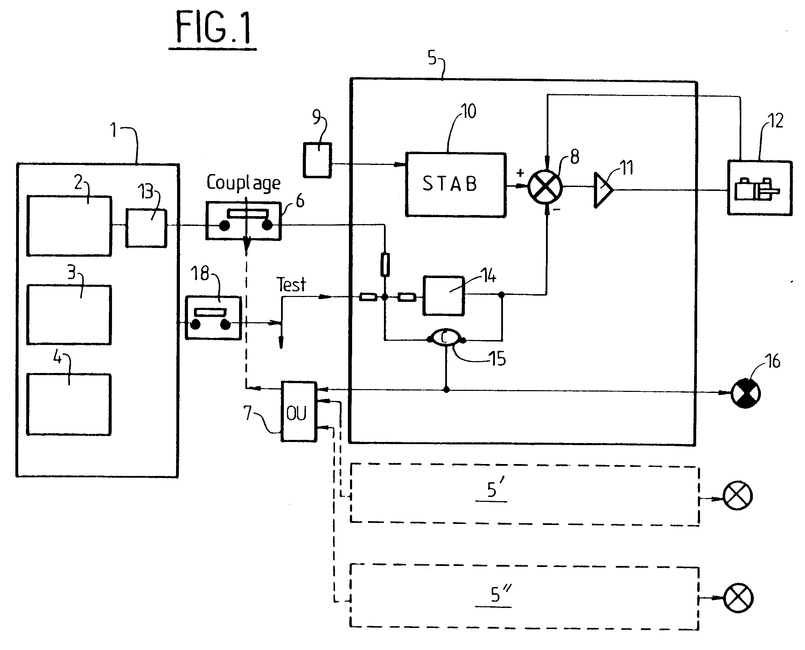

Dans l'exemple représenté sur la figure 1, le système de pilotage automatique fait intervenir un calculateur numérique de consigne 1, qui a en charge le calcul des modes supérieurs et qui est représenté par un bloc renfermant des modules de calcul 2, 3, 4.

Dans cet exemple, le module 2 (calcul des modes supérieurs d'un axe de pilotage) est connecté à l'entrée de l'axe correspondant du pilote automatique 5 de l'aérodyne à travers un élément de couplage 6 à ouverture commandable manuellement ou, notamment, par une porte OU, 7. Les autres axes du pilote automatique ont été représentés schématiquement par les blocs 5' et 5'' en traits interrompus.

Cet axe de pilote automatique 5 comprend, de façon classique, un soustracteur 8 qui reçoit sur ses entrées les différents signaux suivants : un signal représentatif du paramètre STAB, détecté par un capteur 9 puis traité par un circuit classique de stabilisation et de tenue de références 10 ; un signal représentatif de la position et/ou de la vitesse de la gouverne ; un signal représentatif de la consigne provenant du calculateur 1.

La sortie du soustracteur commande, par l'intermédiaire d'un amplificateur 11, un actionneur 12 agissant sur le susdit paramètre, par le biais de la gouverne.

Le circuit reliant le module 2 du calculateur 1 à l'élément de couplage 6 comprend un premier limiteur 13 tel que, par exemple, un limiteur d'amplitude et de vitesse (nécessaire pour une bonne réalisation des modes supérieurs tels que mise en virage automatique).

De même, le circuit reliant l'élément de couplage 6 à l'entrée de consigne du soustracteur 8 comprend ici un deuxième limiteur 14 identique au premier, aux bornes duquel est monté en parallèle un comparateur 15 présentant une très bonne sensibilité sur tout le domaine de sortie du calculateur 1.

Ce comparateur 15 a pour but de comparer le signal que le limiteur reçoit sur son entrée avec le signal qu'il produit à sa sortie et d'émettre un signal d'alarme dans le cas où il y a une discordance entre ces deux signaux qui serait due à une défaillance du signal de consigne.

Ce signal sert à informer le pilote de l'état du calculateur 1 ; il peut déclencher une alarme 16 perceptible par le pilote et est transmis à l'une des entrées du circuit OU, 7 qui ouvre l'élément de couplage 6.

Les autres entrées de ce circuit OU, 7 sont connectées au comparateur 15 des autres axes de pilotage.

Avant vol, le comparateur 15, qui assure au système la validité de la consigne élaborée par le bloc 2, doit être testé. Grâce à une commande forfaitaire générée par le bouton poussoir 18 et injectée en amont du limiteur, il est possible de vérifier toute la chaîne : comparateur 15, alarme 16, coupleur 6.

La fonction de ce circuit OU, 7 est plus particulièrement d'ouvrir le coupleur 6 dans le cas où un signal d'alarme est émis par le comparateur 15 ou dans le cas où, lors d'une séquence de tests, on désire appliquer un signal de tests produit au niveau du poussoir 18, à l'entrée du limiteur 14.

Le fonctionnement du système précédemment décrit est alors le suivant :

En fonctionnement normal, le module de calcul 2 élabore un signal de consigne qui subit une première limitation et donc un calibrage grâce au limiteur 13, puis est transmis au deuxième limiteur 14 via le dispositif de couplage 6. Compte tenu du fait que les deux limiteurs 13, 14 sont identiques, le second limiteur 14 n'aura aucun effet sur le signal de consigne et le comparateur 15 se limitera à constater une concordance entre l'entrée et la sortie du limiteur 14. Le signal de consigne est donc appliqué au soustracteur 8, lequel pilote les gouvernes de manière à réduire à zéro l'écart entre la valeur de consigne et la valeur de la commande de gouverne nécessaire pour atteindre cette consigne.

Par contre, lorsque le signal fourni par le premier limiteur 13 se trouve déformé en raison d'une défaillance des capteurs ou des calculs effectués par le module 2, il perd son calibrage et se trouvera re-calibré par le second limiteur 14. Le comparateur constatera donc une discordance entre le signal d'entrée et le signal de sortie du second limiteur 14 et émettra un signal d'alarme.

Ce signal d'alarme pourra provoquer l'activation de l'alarme 16 (par exemple l'éclairement d'un voyant lumineux sur le tableau de bord de i'aéronef) et provoquera l'ouverture du dispositif de couplage 6.

Dans le cas où l'on veut effectuer un test de bon fonctionnement du pilote automatique, le dispositif de tests 18 doit être amené en position fermée.

Un signal de tests calibré est donc transmis à l'entrée du deuxième limiteur. Il devient donc possible de vérifier avant le vol le bon fonctionnement du comparateur 15, de l'alarme 16 et de la commande de découplage 6 via le circuit OU, 7.

Grâce à ces dispositions, on atteint un taux de couverture très élevé (de l'ordre de 99% ou plus).

La validation d'un tel circuit au sol ne présente pas de difficultés et assure un grand niveau de couverture. Pour d'autres dispositifs de sécurité, des tests avant vol nécessitent des dispositions et des précautions particulières.

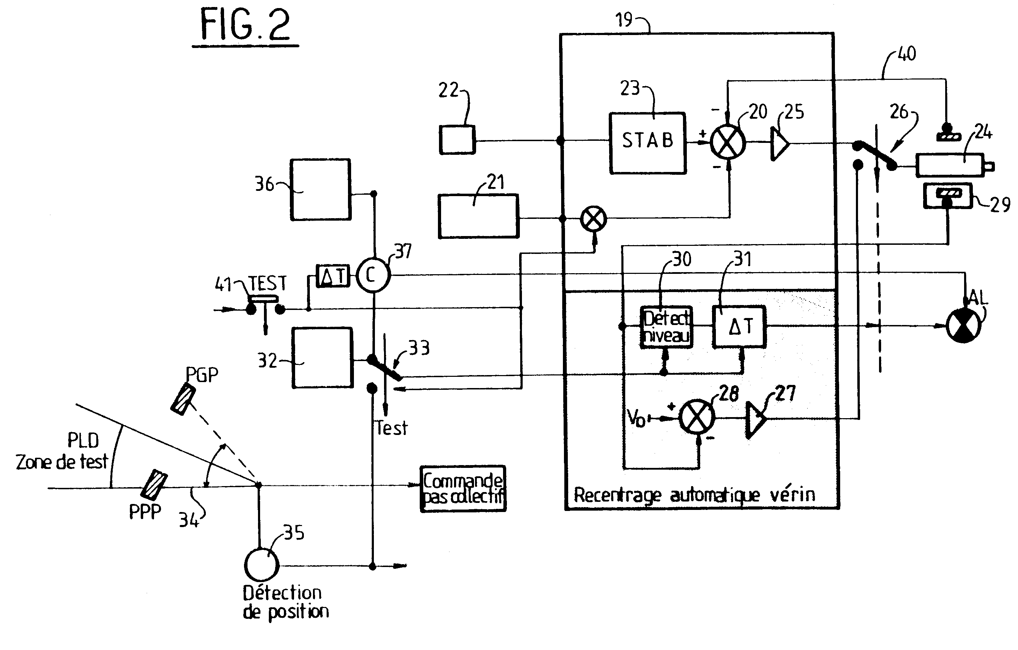

Tel est le cas du système de pilotage avec recentrage automatique des vérins qui se trouve illustré sur la figure 2.

Dans cet exemple, l'axe de pilotage 19 qui n' est que partiellement représenté, fait intervenir une boucle d'asservissement comprenant un soustracteur 20 qui reçoit sur ses entrées les différents signaux suivants : un signal représentatif du paramètre STAB, détecté par un capteur 22 puis traité par un circuit classique de stabilisation et de tenue de références 23 ; un signal représentatif de la position et/ou de la vitesse de la gouverne (circuit 40) ; un signal représentatif de la consigne provenant du calculateur 21. La sortie de ce soustracteur 20 est reliée à l'entrée de commande d'un vérin 24, par l'intermédiaire d'un circuit de puissance comprenant un amplificateur 25 et un commutateur 26.

Ce commutateur 26 est plus particulièrement conçu de manière à connecter à l'entrée du vérin 24, soit la sortie de l'amplificateur 25, soit la sortie d'un amplificateur de puissance 27 d'un circuit de recentrage automatique du vérin 24. Ce circuit comprend notamment un soustracteur 28 dont une entrée reçoit un signal Vo représentatif de la position centrée du vérin 24, tandis que l'autre entrée est reliée à un détecteur 29 qui détecte la position réelle du vérin 24.

La commande du commutateur 26 est assurée par un circuit de sécurité comprenant en série un détecteur de niveau 30 connecté à la sortie du détecteur 29, et une temporisation 31. Ce circuit est conçu de manière à ce que la temporisation 31 délivre un signal de recentrage qui fait basculer le commutateur 26 lorsque le signal délivré par le détecteur 29 s'élève au-dessus du seuil du détecteur de niveau 30 (d'élongation du vérin) et s'est maintenu au-dessus de ce seuil pendant une période déterminée par la temporisation 31. Dans ce cas, le vérin 24 se trouve déconnecté du système de pilotage automatique et est commandé par le circuit de recentrage du vérin de manière à annuler l'écart entre la consigne de position centrée du vérin (signal Vo) et la position détectée par le détecteur 29.

Parallèlement, le circuit de temporisation 31 provoque l'activation d'un dispositif d'alarme AL perceptible par le pilote.

Le recentrage du vérin 24 contribue à éliminer ou à réduire très sensiblement les conséquences de la panne en commandant un effet inverse sur la trajectoire. Bien entendu, la contrepartie immédiate de l'efficacité de ce dispositif est qu'il ne doit être mis en oeuvre que lors d'une élongation anormale du vérin, ce qui exclut toute possibilité de tests en vol du système de recentrage.

Or, il s'avère que l'élongation anormale du vérin 24 ainsi que le seuil d'élongation évoluent en fonction des conditions de vol de l'hélicoptère et le système, en particulier le circuit de sécurité 30, 31, doit être ajusté en fonction de ces conditions.

C'est la raison pour laquelle le seuil du détecteur de niveau 30 ainsi que la période de temps de la temporisation 31 sont réglés en fonction de ces conditions et, en particulier, de la vitesse.

A cet effet, les entrées de réglage du détecteur de niveau 30 et de la temporisation 31 sont connectées à un capteur de vitesse 32 par l'intermédiaire d'un commutateur 33.

Il est clair que pour les raisons précédemment évoquées, les tests du système de recentrage automatique du vérin ne peuvent pas être exécutés en vol.

En conséquence, l'invention propose d'utiliser, en mode de tests au sol, les informations de positions angulaires du manche de commande 34 du collectif de l'aéronef, dans une zone test comprise entre la position en butée plein petits pas PPP et la position limite de décollage PLD, pour commander l'application au détecteur de niveau 30 et à la temporisation 31, d'un signal de réglage représentatif d'une vitesse éventuellement variable en fonction de ladite position.

A cet effet, lorsque le manche de commande 34 du collectif se trouve dans la zone test, le passage en mode test au sol (grâce au poussoir 41) provoque la commutation du commutateur 33 qui déconnecte le capteur de vitesse 32 du système de recentrage automatique du vérin et applique à sa place un signal de vitesse déterminé par un détecteur de position angulaire 35 associé au manche de commande 34 du collectif.

Dans cette position, le pilote peut exécuter une séquence de tests du vérin 24, au cours de laquelle il peut relever, en vue d'une vérification, le seuil d'élongation et la durée de dépassement ΔT de ce seuil à l'issue duquel un recentrage du vérin se produit, et ce, pour une vitesse déterminée (qui peut être fonction de la position angulaire du manche de commande du collectif). Le pilote pourra ensuite recommencer la séquence de tests pour plusieurs positions angulaires du manche de commande du collectif, correspondant à des vitesses différentes les unes des autres. En pratique, trois valeurs de vitesse correspondant à trois positions angulaires du manche peuvent suffire.

Il convient de remarquer que ces tests ne permettent pas de vérifier le bon fonctionnement du capteur de vitesse 32.

Pour pallier à cet inconvénient, on prévoit un deuxième capteur de vitesse 36 ou un déclencheur à seuil de vitesse et un comparateur 37 destiné à vérifier en permanence ou périodiquement la concordance des signaux délivrés par les deux capteurs.

En cas de discordance, le comparateur 37 agit de manière à activer le dispositif d'alarme AL.

Le deuxième capteur de vitesse pourra consister en un capteur identique. Dans ce cas, la comparaison pourra être effectuée en continu ou même périodiquement à une fréquence élevée.

Il pourra également consister en un déclencheur à seuil de vitesse. Dans ce cas, la comparaison ne s'effectue que lorsque la vitesse de l'aéronef atteint le seuil.

## Revendications

1. Procédé pour la validation au sol des fonctions de sécurité du système de pilotage équipant un aérodyne,
caractérisé en ce qu'il consiste, d'une part, à disposer, en parallèle avec chacun des capteurs (32) de la fonction que l'on veut valider dans au moins une condition de vol prédéterminée, des moyens de forçage commandables (33, 35) aptes à appliquer sur l'entrée d'un circuit de sécurité (30, 31, AL) auquel se trouve connecté le capteur (32) et en remplacement du signal de sortie émis par celui-ci, au moins un signal de simulation correspondant au signal qui serait émis par ce même capteur (32) dans ladite condition de vol et, d'autre part, à utiliser au moins une position angulaire d'un organe de commande de pas collectif (34) de l'aérodyne comprise entre la position plein petits pas (PPP) et une position limite de décollage (PLD), pour activer les susdits moyens de forçage (33, 35) afin de produire le susdit signal de simulation lors d'une séquence de tests de validation de l'intégrité des circuits de sécurité (30, 31, AL).

2. Procédé selon la revendication 1,
caractérisé en ce que le susdit signal de simulation est variable en fonction de la position angulaire de l'organe de commande de pas collectif (34).

3. Procédé selon l'une des revendications 1 et 2,
caractérisé en ce qu'il comprend une vérification en vol de la conformité des informations délivrées par le susdit capteur (32) avec les informations fournies par un deuxième capteur (36), et l'émission d'un signal d'alarme lorsque cette vérification fait apparaître une discordance.

4. Procédé selon l'une des revendications précédentes, dans lequel la fonction de sécurité à valider consiste en la détection du seuil d'allongement d'un vérin (24) associé à un dispositif de recentrage de ce vérin (26, 27, 28, 29), et où la valeur du seuil de méme que la période de temps (ΔT) pendant laquelle le seuil peut être dépassé avant de provoquer le recentrage du vérin (24), varient en fonction de la vitesse de l'aérodyne,
caractérisé en ce qu'il consiste à substituer pendant la phase de tests au sol l'information délivrée par un capteur de vitesse (32), par une information élaborée à partir de la position angulaire de la commande du pas collectif (34), et à vérifier la valeur du seuil d'élongation du vérin (24) et la période de temps précédant le recentrage automatique du vérin 24), à compter du moment où le seuil d'élongation a été franchi.

5. Procédé selon l'une des revendications précédentes, dans lequel le système de pilotage de l'aéronef comprend un calculateur numérique (1) qui transmet, pour chacun des axes de pilotage, un signal de consigne à un soustracteur (8) d'une boucle d'asservissement du pilote automatique par l'intermédiaire d'un dispositif de couplage (6),
caractérisé en ce qu'il comprend une première limitation du signal (13) transmis par le calculateur (1) au dispositif de couplage (6), une deuxième limitation du signal (14) transmis par ledit dispositif de couplage (6) au susdit soustracteur (8), une vérification de la concordance entre le signal délivré par le dispositif de couplage (6) et le signal ayant subi la deuxième limitation, et la transmission d'un signal d'alarme en cas de discordance de ces deux signaux.

6. Dispositif pour la mise en oeuvre du procédé selon l'une des revendications précédentes,
caractérisé en ce qu'il comprend des moyens de détection (35) de la position angulaire de l'organe de commande de pas collectif de l'aéronef (34), et des moyens (33) permettant d'appliquer à l'entrée d'un circuit de sécurité (30, 31, AL) auquel se trouve connecté un capteur (32), et en remplacement du signal émis par ce capteur (32), un signal de simulation correspondant à une condition de vol déterminée, lorsque l'organe de commande (34) se trouve dans une position angulaire comprise entre la position plein petits pas (PPP) et une position limite de décollage (PLD).

7. Dispositif selon la revendication 6,
caractérisé en ce qu'il comprend des moyens (35) permettant de faire varier le signal de simulation en fonction de la position angulaire de l'organe de commande de pas collectif (34).

8. Dispositif selon l'une des revendications 6 et 7,
caractérisé en ce que le susdit circuit de sécurité consiste en un circuit de recentrage automatique d'un vérin (24) comprenant un soustracteur (28) dont une entrée reçoit un signal (Vo) représentatif de la position centrée du vérin (24), tandis que l'autre entrée est reliée à un détecteur (29) qui détecte la position réelle du vérin, la sortie de ce soustracteur (28) étant reliée à l'entrée de commande du vérin (24) par l'intermédiaire d'un amplificateur de puissance (27) et d'un commutateur (26) dont la commande est assurée par le circuit de sécurité comprenant en série un détecteur de niveau (30) relié à la sortie dudit détecteur (29), et une temporisation (31), ce circuit étant conçu de manière à ce que la temporisation (31) délivre un signal de recentrage qui fait basculer le commutateur (26) lorsque le signal délivré par le détecteur (29) s'élève au-dessus du seuil du détecteur de niveau et s'est maintenu pendant une période de temps déterminée par la temporisation (31), et en ce que les entrées de réglage du détecteur de niveau (30) et de la temporisation (31) sont connectées, soit à un premier capteur de vitesse (32), soit à un détecteur de position angulaire (35) associé au manche de commande (34) du collectif, grâce à un commutateur (33) commandé par un organe de commande de test (41).

9. Dispositif selon la revendication 8,
caractérisé en ce qu'il comprend un deuxième capteur de vitesse (36) ou un déclencheur à seuil de vitesse et un comparateur (37) destiné à vérifier en permanence ou périodiquement la concordance des signaux respectivement délivrés par les premier et second capteurs de vitesse (32) et (36) et à activer un dispositif d'alarme en cas de discordance.

## Claims

1. A method for validation on the ground of the safety functions of the piloting system equipping an aerodyne,
characterized in that it consists, on the one hand, in arranging, in parallel to each of the sensors (32) of the function to be validated for at least one predetermined flight condition, controllable forcing means (33, 35) capable of applying, at input of a safety circuit (30, 31, AL) to which the sensor (32) is connected and in replacement of the output signal emitted by the latter, at least one simulation signal corresponding to the signal which would be emitted by this same sensor (32) in said flight condition, and, on the other hand, in using at least one angular position of a collective pitch control mechanism (34) of the aerodyne, included between the minimum lift position (PPP) and a maximum lift position (PLD), for activating said forcing means (33, 35) in order to produce said simulation signal during a series of tests to validate the integrity of the safety circuits (30, 31, AL).

2. The method as claimed in claim 1,
characterized in that said simulation signal is variable as a function of the angular position of said collective pitch control mechanism (34).

3. The method as claimed in claim 1 or claim 2,
characterized in that it comprises an in-flight check of the consistency of the data provided by said sensor (32) with the data provided by a second sensor (36), and the emitting of an alarm signal when this check reveals an inconsistency.

4. The method as claimed in any one of the preceding claims, wherein the safety function to be validated consists in the detection of the extension threshold of a thruster (24) associated with a recentering device for this thruster (26, 27, 28, 29), and wherein the threshold value and the period of time (ΔT) during which the threshold may be exceeded before bringing about a recentering of the thruster (24) vary as a function of the speed of the aerodyne,
characterized in that it consists in replacing, during the testing phase on the ground, the data provided by the speed sensor (32) with data generated from the angular position of the collective pitch control (34), and in checking the value of the thruster (24) extension threshold and the period of time preceding automatic recentering of the thruster (24), from the moment the extension threshold has been exceeded.

5. The method as claimed in any one of the preceding claims, wherein the aerodyne piloting system comprises a digital computer (1) which transmits, for each of the piloting axes, an instruction signal to a subtracter (8) of a control loop of the automatic pilot, via a coupling device (6),
characterized in that it comprises a first limitation of the signal (13) transmitted by the computer (1) to the coupling device (6), a second limitation of the signal (14) transmitted by said coupling device (6) to said subtracter (8), a check on the consistency between the signal supplied by the coupling device (6) and the signal having undergone the second limitation, and the transmission of an alarm signal in the event of inconsistency between these two signals.

6. A device for implementing the method as claimed in any one of the preceding claims,
characterized in that it comprises a means (35) for detecting the angular position of the collective pitch control mechanism (34), and a means (33) enabling application, at input of a safety circuit (30, 31, AL) to which a sensor (32) is connected and in replacement of the signal emitted by said sensor (32), of a simulation signal corresponding to a predetermined flight condition, when the control mechanism (34) is in an angular position included between the minimum lift position (PPP) and a maximum lift position (PLD).

7. The device as claimed in claim 6,
characterized in that it comprises a means (35) enabling the simulation signal to be varied as a function of the angular position of the collective pitch control mechanism (34).

8. The device as claimed in one of claims 6 and 7,
characterized in that said safety circuit consists of an automatic thruster (24) recentering circuit comprising a subtracter (28) of which one input receives a signal (Vo) representing the centered position of the thruster (24), whereas the other input is connected to a detector (29) which detects the real position of the thruster, the output of said subtracter (28) being connected to the control input of the thruster (24) via a power amplifier (27) and a switch (26) which is controlled by the safety circuit comprising, in series, a level detector (30) connected to the output of said detector (29), and a time-out (31), said circuit being designed so that the time-out (31) issues a recentering signal which trips the switch (26) when the signal supplied by the detector (29) exceeds the threshold of the level detector and remains above it for a period of time determined by the time-out (31), and in that the adjustment inputs of the level detector (30) and the time-out (31) are connected, either to a first speed sensor (32), or to an angular position detector (35) associated with the control stick (34) of the collective controls, by means of a switch (33) controlled by a test control mechanism (41).

9. The device as claimed in claim 8,
characterized in that it comprises a second speed sensor (36) or a speed threshold trigger and a comparator (37) destined to permanently or periodically check the consistency of the signals respectively supplied by the first and second speed sensors (32) and (36), and to activate an alarm device in the event of inconsistency.

## Patentansprüche

1. Verfahren zur Betriebsprüfung am Boden der Sicherheitsfunktionen des Flugsteuersystems eines Luftfahrzeugs,
dadurch gekennzeichnet, daß es einerseits darin besteht, in Parallelschaltung mit jeder der Meßsonden (32) der Funktion, die man unter mindestens einer vorbestimmten Flugbedingung überprüfen will, steuerbare Mittel (33, 35) anzuordnen, die an den Eingang einer Sicherheitsschaltung (30, 31, AL), mit der die Meßsonde (32) verbunden ist, und als Ersatz für das von dieser ausgegebene Ausgangssignal, mindestens ein Simulationssignal entsprechend dem Signal anlegen können, das von dieser Meßsonde (32) unter dieser Flugbedingung ausgesendet würde, und andererseits darin besteht, mindestens eine Winkelposition eines kollektiven Blattverstellungs-Steuerorgans (34) des Luftfahrzeugs zu verwenden, die zwischen der vollen Position kleine Steigungen (position plein petits pas) (PPP) und einer Grenzposition des Abhebens (position limite de décollage) (PLD) liegt, um die erwähnten Mittel (33, 35) zu aktivieren, damit sie das Simulationssignal bei einer Testfolge der Überprüfung der Unversehrtheit der Sicherheitsschaltungen (30, 31, AL) erzeugen.

2. Verfahren nach Anspruch 1, dadurch gekennzeichnet, daß das Simulationssignal in Abhängigkeit von der Winkelposition des kollektiven Blattverstellungs-Steuerorgans (34) variabel ist.

3. Verfahren nach einem der Ansprüche 1 und 2, dadurch gekennzeichnet, daß es eine Überprüfung während des Flugs der Übereinstimmung der von der Meßsonde (32) gelieferten Informationen mit den Informationen, die von einer zweiten Meßsonde (36) geliefert werden, und die Aussendung eines Alarmsignals enthält, wenn diese Überprüfung eine Nichtübereinstimmung aufzeigt.

4. Verfahren nach einem der vorhergehenden Ansprüche, bei dem die zu überprüfende Sicherheitsfunktion in der Erfassung des Längungs-Schwellwerts eines Stellglieds (24) besteht, der einer Vorrichtung zur Rückzentrierung dieses Stellglieds (26, 27, 28, 29) zugeordnet ist, und bei dem der Schwellwert und die Zeitperiode (ΔT), während der der Schwellwert überschritten werden kann, bevor die Rückzentrierung des Stellglieds (24) bewirkt wird, in Abhängigkeit von der Geschwindigkeit des Luftfahrzeugs variieren,
dadurch gekennzeichnet, daß es darin besteht, während der Phase der Tests am Boden die von einer Geschwindigkeitsmeßsonde (32) gelieferte Information durch eine Information zu ersetzen, die ausgehend von der Winkelposition der Steuerung der kollektiven Blattverstellung (34) ausgearbeitet wird, und den Wert des Längungs-Schwellwerts des Stellglieds (24) und die der automatischen Rückzentrierung des Stellglieds (24) vorhergehende Zeitperiode ausgehend von dem Zeitpunkt zu überprüfen, in dem der Längungs-Schwellwert überschritten wurde.

5. Verfahren nach einem der vorhergehenden Ansprüche, bei dem das Flugsteuersystem des Luftfahrzeugs einen digitalen Rechner (1) aufweist, der für jede der Flugsteuerachsen ein Sollwertsignal zu einem Subtrahierglied (8) einer Regelschleife des Autopiloten über eine Koppelvorrichtung (6) überträgt,
dadurch gekennzeichnet, daß es eine erste Begrenzung des Signals (13), das vom Rechner (1) zur Koppelvorrichtung (6) übertragen wird, eine zweite Begrenzung des Signals (14), das von der Koppelvorrichtung (6) zum Subtrahierglied (8) übertragen wird, eine Überprüfung der Übereinstimmung zwischen dem von der Koppelvorrichtung (6) gelieferten Signal und dem Signal, das der zweiten Begrenzung unterworfen wurde, und die Übertragung eines Alarmsignals im Fall einer Nichtübereinstimmung dieser beiden Signale enthält.

6. Vorrichtung zur Anwendung des Verfahrens nach einem der vorhergehenden Ansprüche, dadurch gekennzeichnet, daß es Mittel (35) zur Erfassung der Winkelposition des kollektiven Blattverstellungs-Steuerorgans (34) des Luftfahrzeugs und Mittel (33) aufweist, die es ermöglichen, an den Eingang einer Sicherheitsschaltung (30, 31, AL), an die eine Meßsonde (32) angeschlossen ist, und als Ersatz für das von dieser Meßsonde (32) ausgesandte Signal ein Simulationssignal anzulegen, das einer bestimmten Flugbedingung entspricht, wenn das Steuerorgan (34) sich in einer Winkelposition befindet, die zwischen der vollen Position kleine Steigung (PPP) und einer Grenzposition des Abhebens (PLD) liegt.

7. Vorrichtung nach Anspruch 6, dadurch gekennzeichnet, daß sie Mittel (35) aufweist, die es ermöglichen, das Simulationssignal in Abhängigkeit von der Winkelposition des kollektiven Blattverstellungs-Steuerorgans (34) variieren zu lassen.

8. Vorrichtung nach einem der Ansprüche 6 und 7, dadurch gekennzeichnet, daß die Sicherheitsschaltung aus einer automatischen Rückzentrierschaltung eines Stellglieds (24) besteht, die ein Subtrahierglied (28) enthält, dessen einer Eingang ein Signal (Vo) empfängt, das für die zentrierte Stellung des Stellglieds (24) repräsentativ ist, während der andere Eingang mit einem Detektor (29) verbunden ist, der die tatsächliche Position des Stellglieds erfaßt, wobei der Ausgang dieses Subtrahierglieds (28) mit dem Steuereingang des Stellglieds (24) über einen Leistungsverstärker (27) und einen Umschalter (26) verbunden ist, dessen Steuerung von der Sicherheitsschaltung gewährleistet wird, die in Reihe einen Pegeldetektor (30), der mit dem Ausgang des Detektors (29) verbunden ist, und ein Verzögerungsglied (31) aufweist, wobei diese Schaltung so ausgebildet ist, daß das Verzögerungsglied (31) ein Rückzentriersignal liefert, das den Schalter (26) kippen läßt, wenn das vom Detektor (29) gelieferte Signal den Schwellwert des Pegeldetektors überschreitet und sich während einer durch das Verzögerungsglied (31) bestimmten Zeitperiode gehalten hat, und daß die Einstelleingänge des Pegeldetektors (30) und des Verzögerungsglieds (31) entweder mit einer ersten Geschwindigkeitsmeßsonde (32) oder mit einem Winkelpositionsdetektor (35) verbunden sind, der dem Steuerknüppel (34) der kollektiven Blattverstellung zugeordnet ist, mittels eines Schalters (33), der von einem Teststeuerorgan (41) gesteuert wird.

9. Vorrichtung nach Anspruch 8, dadurch gekennzeichnet, daß sie eine zweite Geschwindigkeitsmeßsonde (36) oder eine Auslösevorrichtung mit Geschwindigkeitsschwellwert und einen Komparator (37) aufweist, der durchgehend oder periodisch die Übereinstimmung der von der ersten bzw. der zweiten Geschwindigkeitsmeßsonde (32 bzw. 36) gelieferten Signale überprüfen und bei einer Nichtübereinstimmung eine Alarmvorrichtung auslösen soll.
